# EUROPÄISCHE PATENTSCHRIFT

(11) **EP 2 335 520 B1**
(45) Veröffentlichungstag und Bekanntmachung des Hinweises auf die Patenterteilung: **05.11.2014**
(21) Anmeldenummer: 10011706.8
(22) Anmeldetag: 20.12.2002
(51) Int. Cl.: A46B 9/06, A46B 15/00

(54) **Zahnbürste und Verfahren zur Herstellung einer solchen Zahnbürste**
Tooth brush and method for the manufacture of such a tooth brush
Brosse à dents et procédé de fabrication d'une telle brosse à dents

(30) Priorität: 28.12.2001 DE 10164336
(43) Veröffentlichungstag der Anmeldung: 22.06.2011
(62) Teilanmeldung aus: 09000395.5
(73) Patentinhaber: Trisa Holding AG, 6234 Triengen (CH)
(72) Erfinder: Fischer, Franz, 6234 Triengen (CH); Strähler, Reto, 6034 Adligenswil (CH)
(74) Vertreter: Schaad, Balass, Menzl & Partner AG

(56) Entgegenhaltungen:
- WO-A-00/76369
- DE-U1- 20 006 311
- US-A- 2 042 239
- US-A- 2 129 082
- US-A- 2 139 245
- US-A- 5 802 656

## Beschreibung

Die Erfindung betrifft ein Trägerelement gemäss dem Oberbegriff von Anspruch 1 und ein Verfahren zu dessen Herstellung mit den Merkmalen von Anspruch 19.

Zahnbürsten mit einem konventionellen Borstenfeld bestehend aus Bündeln von Borstenfilamenten, z.B. aus Polyamid (PA) oder Polyester (PBT), und einer zusätzlichen weichelastischen Struktur sind zum Beispiel aus der WO 00/64307 und der WO 01/21036 bekannt. Die konventionellen Borsten dienen dabei zur gewöhnlichen Reinigung der Zähne, während die weichelastische Struktur unterschiedliche Funktionen erfüllen kann, z.B. Massage des Gaumens, Dämpfung der Putzbewegung, Entfernung von Zahnbelägen, Polieren der Zahnoberfläche, elastische Aufhängung der Borsten und/oder Abdichten ungeschweisster Stellen. Die WO 00/64307 offenbart eine Zahnbürste mit stabförmigen weichelastischen Reinigungselementen, die etwa dieselbe Länge wie die konventionellen Borstenbündel haben und peripher am Kopfteil der Zahnbürste angeordnet sind. Bei der WO 01/21036 sind elastische Reinigungselemente flächig, z.B. wellenförmig gestaltet, und innerhalb des konventionellen Borstenfelds angeordnet. Bei der WO 00/64307 sind mehrere der weichelastischen Reinigungselemente über eine Materialbrücke aus demselben Material miteinander verbunden. Die Reinigungselemente werden nach dem Beborsten des Kopfteils der Zahnbürste mit konventionellen Borsten durch Umspritzen des Kopfteils hergestellt. Nachteilig hieran ist, dass die Borstenfilamente vor der Herstellung der weichelastischen Struktur gebrauchsfertig gemacht werden müssen, z.B. durch Abrunden der Borstenbündel oder Herstellen einer vorbestimmten Profilierung. Anschliessend ist ein erneutes Einsetzen in das Spritzgiesswerkzeug zur Herstellung der weichelastischen Struktur notwendig. Dabei können die Borstenbündel beschädigt oder verschmutzt werden. Die herstellbaren Formen der weichelastischen Struktur sind unter anderem aus entformungstechnischen Gründen beschränkt.

In der DE 200 06 311 U1 wird eine Vorrichtung beschrieben, mit der eine zuverlässige Verbindung zwischen einem mit Borstenbüscheln versehenen Trägerplättchen und einem Bürstenkörper gewährleistet werden soll. Dabei erfolgt die Verbindung zwischen den Kunststoffen des Plättchens und des Bürstenkörpers durch Ultraschallschweissen. Am Umfangsrand des Plättchens ist eine zu dem Bürstenkörper weisende Kante geformt, die beim Ultraschallschweissen als Energie-Konzentrator wirkt. Die Verschweissung erfolgt daher mit hoher Präzision, so dass das Plättchen auch bei Massenfertigung, wie beispielsweise bei Zahnbürsten, passgenau an dem Bürstenkörper befestigt wird. Der zwischen dem Aussenrand des Plättchens und der Berandung der Ausnehmung verbleibende Spalt wird ggf. anschliessend mittels einer Kunststoffmasse, z.B. einem Elastomer, ausgefüllt.

Der Erfindung liegt die Aufgabe zugrunde, ein Trägerelement mit konventionellen Borsten und einer weichelastischen Struktur zur Verfügung zu stellen, das auf einfache Weise herstellbar ist. Des weiteren soll ein entsprechendes Herstellungsverfahren angegeben werden.

Die Aufgabe wird gelöst durch eine Zahnbürste mit den Merkmalen von Anspruch 1 sowie durch ein Verfahren zur Herstellung einer solchen Zahnbürste mit den Merkmalen von Anspruch 19. Vorteilhafte Weiterbildungen ergeben sich aus den abhängigen Ansprüchen, der Beschreibung und den Zeichnungen.

Erfindungsgemäss ist eine weichelastische Struktur, insbesondere mindestens ein weichelastisches Reinigungselement, an einem Trägerelement angeordnet, das aus einem Hartmaterial besteht. Das Trägerelement und/oder die weichelastische Struktur weist Aussparungen auf, durch die die Borstenfilamente hindurchgeführt und zur Befestigung am Trägerelement mit ihren im Anwendungsfall dem Kopfteil zugewandten rückwärtigen Enden aufgeschmolzen, verschweisst oder verklebt sind. Diese AFT (Anchor Free Tufting) Technologie hat den Vorteil, dass sich weitgehend beliebige Borstenanordnungen, insbesondere auch flächige Borstengebilde, realisieren lassen.

Eine entsprechende Zahnbürste hat Vorteile bei der Herstellung, da das Zusatzteil, d.h. das mit der weichelastischen Struktur versehene Trägerelement, separat hergestellt und auf einfache Weise mit dem Kopfteil verbunden werden kann.

Die Verbindung des Trägerelements mit dem Kopfteil kann auf mechanischem Wege durch Verklemmen oder Verschnappen oder Nieten, chemisch durch Kleben, durch Ultraschallschweissen oder thermisch durch Schweissen oder sonstige Wärmezufuhren hergestellt werden. Herstellungstechnisch bevorzugt ist, dass das Trägerelement aus demselben Material wie das Kopfteil besteht, da in diesem Fall nur eine Hartkomponente zur Herstellung der Bürste bereitgehalten und nicht auf gegenseitige Materialverträglichkeit geachtet werden muss. Dies hat insbesondere beim Ultraschallschweissen Vorteile.

Die Anordnung der weichelastischen Struktur an einem aus einem Hartmaterial bestehenden Trägerelement hat folgende Vorteile: Das Zusatzteil kann separat vom übrigen Zahnbürstenkörper, bestehend aus Handgriff und Kopfteil, gefertigt und für den Endgebrauch vorbereitet werden. In einem einfachen weiteren Schritt erfolgt die Verbindung des Trägerelements mit dem Kopfteil, wobei sämtliche der genannten Verbindungstechniken verwendet werden können und das harte Trägerelement vorzugsweise daran angepasst geformt ist. Das Trägerelement kann beispielsweise so geformt werden, dass es im späteren Verbindungsschritt das Kopfteil in klemmender Weise umgreift. Das Zusatzteil ist aufgrund des harten Trägerelements auf einfache Weise zu handhaben und kann deutlich leichter gegriffen werden als ein vollständig aus einem weichelastischen Material hergestelltes Zusatzteil.

Das Zusatzteil ist im Verhältnis zur übrigen Zahnbürste klein. Daher sind auch die benötigten Werkzeuge klein und kostengünstig. Der Zahnbürstengrundkörper und die Beborstung kann auch bei späterer Ausstattung mit unterschiedlichen Zusatzteilen mit einem Standardwerkzeug hergestellt werden. Um Zahnbürsten mit unterschiedlichen Zusatzteilen herzustellen, muss lediglich das Zusatzteil bzw. das entsprechende Werkzeug dafür ausgetauscht werden, was auf einfache und kostengünstige Weise geschehen kann.

Ein weiterer Vorteil der separaten Herstellung von Zusatzteil und Grundkörper ist, dass beliebige Formen von weichelastischen Reinigungselementen realisiert werden können, z.B. auch solche, die die konventionellen Borsten kreuzen, berühren oder beim Einsetzen des Zusatzteils verdrängen. Durch die separate Herstellung ist die Entformung der weichelastischen Struktur unproblematisch. Es sind Geometrien im Spritzgiessverfahren herstellbar, die nur unter grossem Aufwand entformbar wären, wenn das Reinigungslement direkt auf dem beborsteten Kopfteil angebracht würde.

Bisher wurde die weichelastische Strukturaus herstellungstechnischen Gründen aus demselben Material wie etwaige weichelastische Komponenten am Griffteil hergestellt. Durch die Erfindung ergibt sich für das Material der Struktur eine grössere Freiheit, so dass beispielsweise ein anderer Härtegrad verwendet werden kann. Durch eine unlösbare Verbindung des Zusatzteils mit dem Kopfteil wird verhindert, dass sich das Zusatzteil während des Gebrauchs ablöst, und die Verschluckungsgefahr ausgeschlossen.

Die konventionellen Borsten sind beispielsweise direkt am Kopfteil, an einer als weiteres Trägerelement wirkenden Borstenplatte oder auch am Trägerelement für die weichelastischen Reinigungselemente befestigt, wobei alle Varianten Vorteile aufweisen. Bei der Befestigung der Borsten am Kopfteil bzw. an der Borstenplatte können die weichelastische Struktur und die konventionellen Borsten vor dem Zusammensetzen von Kopfteil und Zusatzteil unabhängig voneinander für den späteren Gebrauch vorbereitet werden, so dass ein gegenseitiges Beschädigen oder Verschmutzen verhindert wird.

Das Anbringen von sowohl konventionellen Borsten als auch der weichelastischen Struktur am Trägerelement hat den Vorteil, dass eine beliebige räumliche Anordnung der beiden Komponenten möglich ist. Ein solches vorbereitetes Trägerelement kann zur Endfertigung mit verschiedenen Zahnbürstengrundkörpern verbunden werden, so dass mit wenigen Grundkörpern eine grosse Anzahl verschiedener Zahnbürsten realisierbar ist.

Die konventionellen Borsten können in beiden Fällen vor oder nach dem Anbringen der weichelastischen Struktur für den Gebrauch vorbereitet werden. Sind beide Komponenten am Trägerelement vorgesehen, wird bevorzugt zuerst die weichelastische Struktur, einschliesslich etwaiger Reinigungselemente, angeformt und das Trägerelement anschliessend mit Borsten besetzt, welche beispielsweise durch Aussparungen in der weichen oder harten Komponente hindurchgeführt sein können.

Die Herstellung des Zusatzteils, d.h. des Trägerelements mit einem oder mehreren weichelastischen Reinigungselementen, erfolgt bevorzugt im Zwei- oder Mehrkomponentenspritzgiessverfahren. Dabei wird vorzugsweise eine unlösbare Verbindung zwischen den Komponenten hergestellt.

Die weichelastische Struktur ist bevorzugt auch seitlich am Trägerelement angeordnet, z.B. angespritzt, wobei sie im montierten Zustand seitlich mit der Aussenkontur des Kopfteils abschliesst oder über diese hinausgeht. Sie dient z.B. zum Abdichten ungeschweisster Stellen, zum Massieren des Gaumens, z.B. durch angespitzte leicht abstehende elastische Elemente, oder als Aufprallschutz beim Putzen.

Vorzugsweise besteht das weichelastische Reinigungselement aus einem insbesondere thermoplastischen Elastomer, z.B. aus natürlichem oder synthetischem Gummi. Für das Trägerelement wird bevorzugt das für den Zahnbürstengrundkörper eingesetzte Material verwendet, insbesondere Polypropylen, Styrol-Acryl-Nitril, Polyester, Acryl-Nitril-Butadienstyrol (ABS) oder Isoplast®. Die Shore A Härte der weichen Komponente ist vorzugsweise geringer als 90 und liegt besonders bevorzugt unter 50.

Da sich gummielastisches Material, insbesondere ein thermoplastisches Elastomer, aufgrund der starken Dämpfung der Ultraschallschwingungen nur bedingt Ultraschall verschweissen lässt, wird die Schweissfläche zwischen Trägerelement und Kopfteil bevorzugt zumindest teilweise von der weichelastischen Komponente freigehalten. Vorzugsweise wird dazu der Anspritzpunkt der Weichkomponente an der borstentragenden Seite des Trägerelements gewählt, damit keine Materialbrücken aus der Weichkomponente die Schweissfläche verkleinern. Für den Fall, dass dennoch im Bereich der Schweissfläche weichelastische Elemente angeordnet werden sollen, wird deren Lage vorzugsweise seitlich von der Längsachse der Zahnbürste gewählt. Damit entstehen unverschweisste Stellen ebenfalls seitlich am Trägerelement, während der in Längsrichtung vordere und hintere Bereich zwischen Trägerelement und Kopfteil verschweisst werden kann. Somit ist ein guter Halt des Trägerelements gewährleistet, da durch die Putzbewegung und die entsprechenden Hebelkräfte vor allem der vordere bzw. hintere Bereich und weniger die Seitenbereiche belastet werden. Eine nur punktuelle Verschweissung mit ungeschweissten Stellen kann auch gezielt eingesetzt werden, damit Bürstenkopf und Trägerelement gegeneinander beweglich sind und so eine gewisse Flexibilität des gesamten Bürstenkopfes erreicht wird.

Die weichelastische Struktur kann nach Art einer Dichtlippe auch zum zusätzlichen Abdichten ungeschweisster Stellen dienen. Dadurch wird vorteilhaft der Raum zwischen dem Trägerelement und dem Kopfteil gegen das Eindringen von Wasser abgedichtet. Somit können sich in diesem Bereich keine Keime ansammeln, und die Bürste ist hygienischer. Um eine angemessene Dichtfunktion zu erreichen, ist die Shore A Härte der Weichkomponente vorzugsweise geringer als 50.

Beispiele für die Erfindung sind in den Zeichnungen dargestellt und nachfolgend beschrieben. Es zeigen rein schematisch:
- Fig. 1a-d: Ansichten einer erfindungsgemässen Zahnbürste in verschiedenen Montagestadien, wobei das Zusatzteil durch Nieten am Kopfteil befestigt wird;
- Fig. 2a-e: Ansichten einer weiteren Zahnbürste, deren Zusatzteil durch Nieten befestigt wird;
- Fig. 3a-e: Ansichten einer Zahnbürste, deren Zusatzteil durch Schweissen befestigt wird;
- Fig. 4a-e: Ansichten einer Zahnbürste, deren Zusatzteil mittels einer Schnappverbindung befestigt wird;
- Fig. 5a-e: Ansichten einer weiteren Zahnbürste, deren Zusatzteil durch eine Schnappverbindung befestigt wird;
- Fig. 6a-f: Ansichten einer Zahnbürste, bei der das Zusatzteil in klemmender Weise befestigt wird;
- Fig. 7a-e: die Herstellung einer Zahnbürste im AFT Verfahren;
- Fig. 8a-e: Ansichten einer weiteren Zahnbürste, deren Zusatzteil durch eine Schnappverbindung befestigt wird;
- Fig. 9a-f: Ansichten einer weiteren Zahnbürste, deren Zusatzteil mit Spiel am Kopfteil befestigt ist;
- Fig. 10a-j: die Herstellung einer weiteren Zahnbürste im AFT Verfahren;
- Fig. 11a-c: Ansichten einer Zahnbürste mit einer seitlichen Umrandung aus weichelastischem Material.

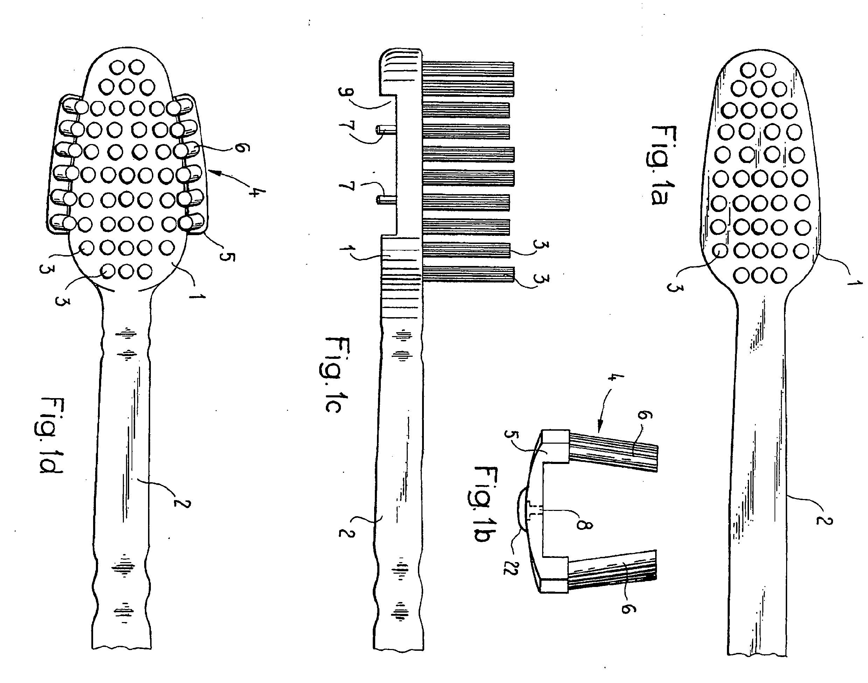

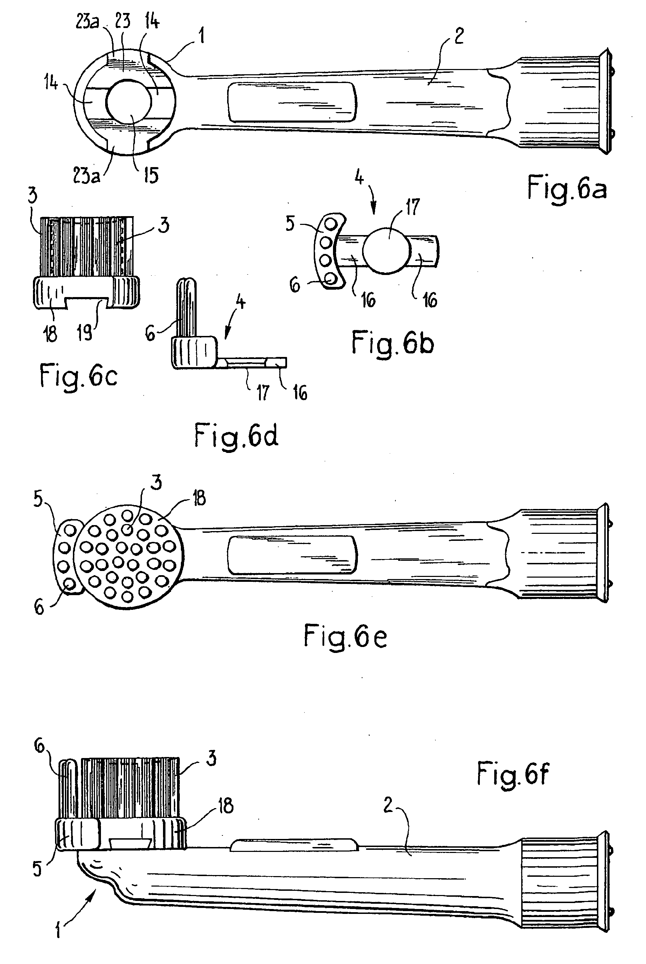

Alle dargestellten Zahnbürsten haben einen Grundkörper mit einem Kopfteil 1 und einem Griffteil 2, der nur teilweise dargestellt ist. Ein Zusatzteil 4 mit mehreren weichelastischen Reinigungselementen 6 unterschiedlicher Form, die mit einem Trägerelement ebenfalls unterschiedlicher Form verbunden sind, ist bei der fertigen Zahnbürste mit dem Kopfteil 1 verbunden. Das Kopfteil 1 ist des weiteren direkt (Fig. 1 - 5) bzw. indirekt (Fig. 6) mit Bündeln 3 aus konventionellen Borstenfilamenten versehen. Material und Anordnung der Borstenbündel 3 kann unterschiedlich sein. Im Folgenden wird nur auf die Besonderheiten der einzelnen Ausführungsbeispiele eingegangen. Dabei sind einander entsprechende Elemente mit gleichen Bezugszeichen bezeichnet.

Fig. 1a,c zeigt eine Zahnbürste, deren Kopfteil 1 bereits mit Borstenbündeln 3 versehen wurde. Das in Fig. 1b dargestellte Zusatzteil 4 hat ein im Schnitt U-förmiges Trägerelement 5 aus einem Hartmaterial, insbesondere demselben Kunststoff, der zur Herstellung des Kopfteils 1 bzw. des gesamten Grundkörpers verwendet wurde. Mit dem Trägerelement 5 sind weichelastische Reinigungselemente 6, hier in Form von geraden Stäben, fest verbunden. Die Reinigungselemente 6 sind leicht aus der Vertikalen aufeinander zu geneigt und schliessen mit der Vertikalen einen Winkel von 5 bis 30° ein. Auf diese Weise berühren die elastischen Reinigungselemente 6 die konventionellen Borstenbündel 3 (Fig. 1d) und können diese sogar kreuzen (nicht dargestellt). Eine derartige Stellung ist mit konventionellen Herstellungsverfahren nur mit aufwendigen Verdrängungstechniken realisierbar.

Das Trägerelement 5 ist in seiner Form an eine in Fig. 1c sichtbare Aussparung 9 im den Borstenbündeln 3 abgewandten Bereich des Kopfteils 1 angepasst. In diesem Bereich befinden sich des weiteren Stifte 7, die durch ein Loch 8 im Trägerelement 5 hindurchgesteckt werden können. Die Stifte 7 werden kalt oder warm verformt und so im Loch 8 dauerhaft fixiert. Eine Aufsicht auf die fertiggestellte Zahnbürste zeigt Fig. 1d.

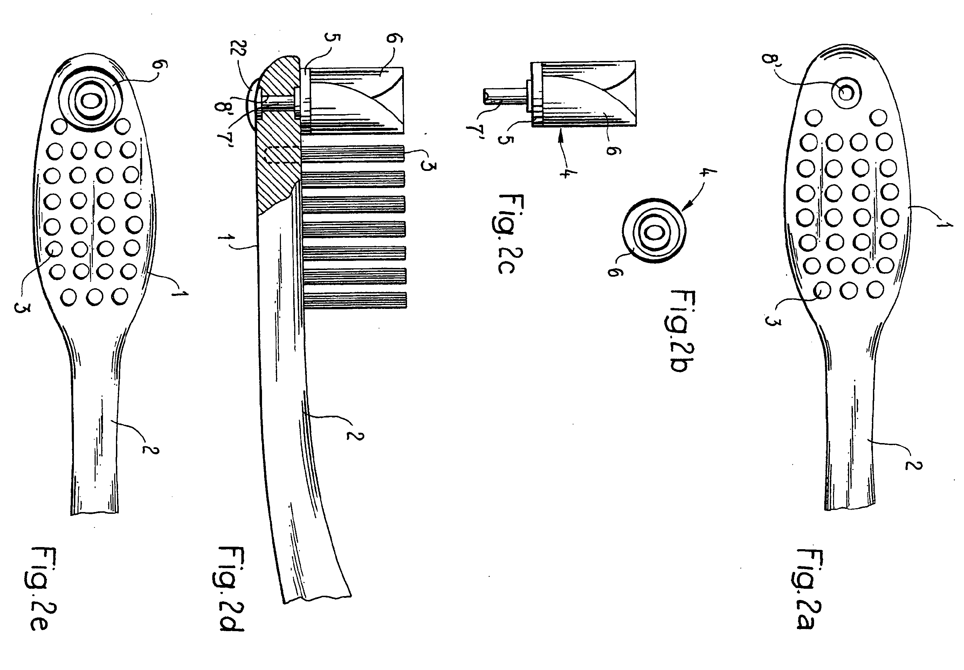

Der untere Bereich des Lochs 8 oder des gesamten Kopfteils 1 kann aus ästhetischen oder hygienischen Gründen durch eine Schutzschicht 22 aus weichem Kunststoff abgedeckt werden (vgl. Fig. 2d). Ebenso werden die Grenzbereiche zwischen dem Trägerelement 5 und dem Kopfteil 1 vorzugsweise durch weichen Kunststoff abgedeckt. Als Material hierfür wird beispielsweise das Weichmaterial verwendet, das auch für den Griffbereich der Zahnbürste verwendet wird. Vorzugsweise wird die Schutzschicht bereits während der Herstellung des Griffteils im Mehrkomponentenspritzgiessverfahren angespritzt. Die Kunststoffschicht kann jedoch auch direkt an das Trägerelement angeformt sein.

Ein weiteres Beispiel für eine Zahnbürste, deren Zusatzteil 4 durch eine Nietverbindung mit dem Kopfteil 1 verbunden wird, ist in Fig. 2a-e dargestellt. Das Zusatzteil besteht hier aus einem tellerförmigen Trägerelement 5, mit dem flächige weichelastische Reinigungselemente 6 rosettenförmig verbunden sind. Das Trägerelement 5 weist einen Stift 7' auf, mit dem das Zusatzteil 4 durch ein entsprechend vorbereitetes Loch 8' im vorderen Ende des Kopfteils durchgesteckt und durch Verformen des Stiftes 7' fixiert werden kann. Die weichelastischen Reinigungselemente 6 befinden sich im Bereich der Spitze des Kopfteils 1. In Richtung des Griffteils 2 schliesst sich das Borstenfeld mit einzelnen Borstenbündeln 3 an. Eine Schutzschicht 22 deckt den Bereich des Lochs 8' ab.

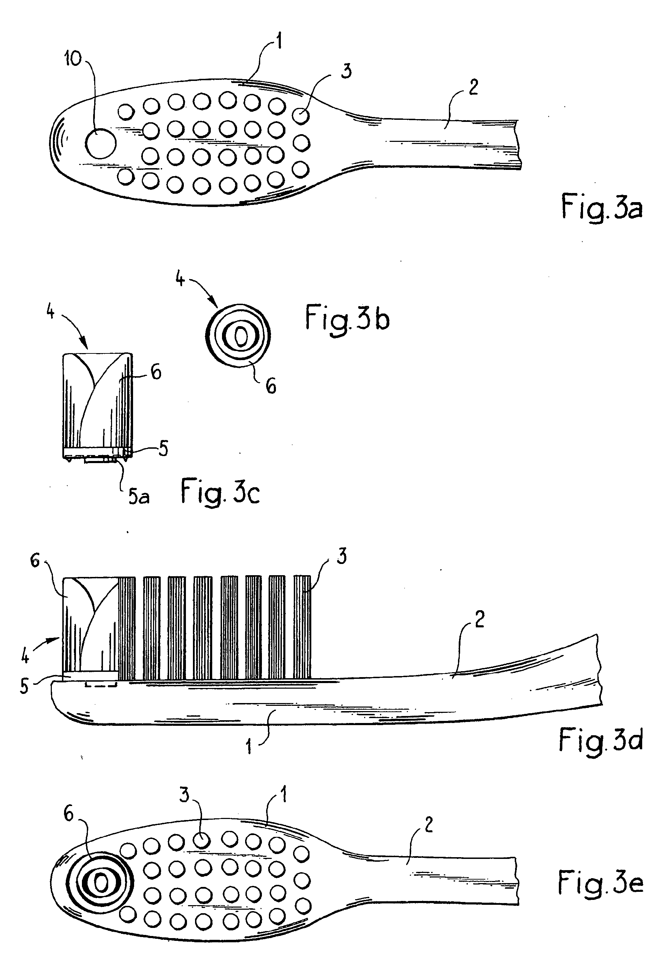

Fig. 3a-e zeigt ein weiteres Beispiel für eine Zahnbürste, die im Ergebnis einer Zahnbürste gemäss Fig. 2 ähnelt. Das Zusatzteil 4 mit einem tellerförmigen Trägerelement 5 und rosettenartigen weichelastischen Reinigungselementen 6 wird vorliegend mittels einer Schweissverbindung mit dem Kopfteil 1 verbunden. Dazu weist der vordere Bereich des Kopfteils eine tellerartige Aussparung auf, in die das Trägerelement 5 dank einer entsprechend strukturierten Unterseite 5a mittels Ultraschallschweissen dauerhaft eingefügt wird. Eine Seitenansicht der fertigen Zahnbürste zeigt Fig. 3d, die Aufsicht auf das kombinierte Borstenfeld aus konventionellen Borstenbündeln 3 und weichelastischen Reinigungselementen 6 zeigt Fig. 3e.

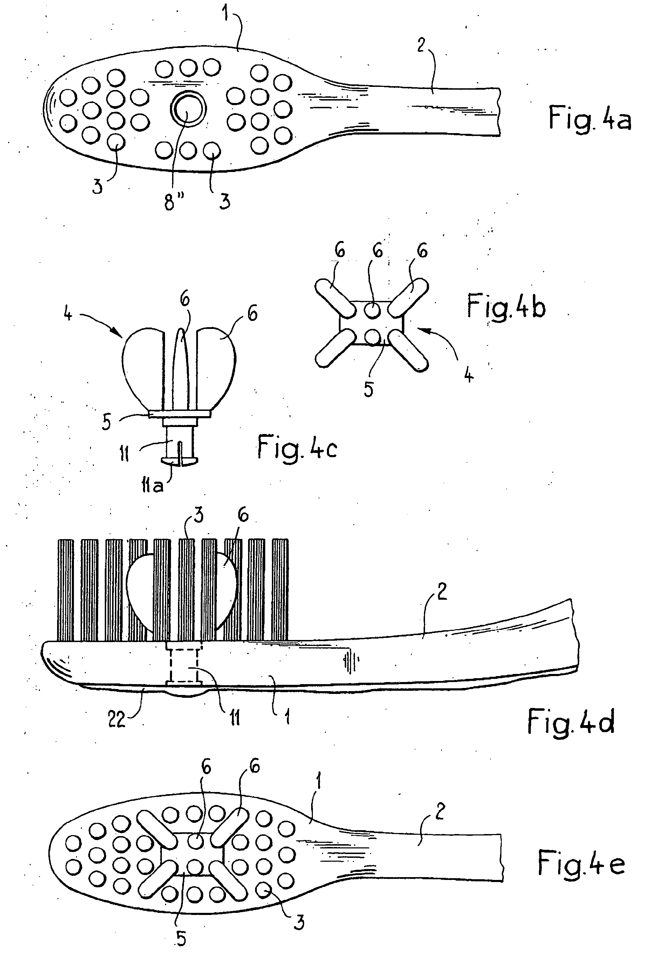

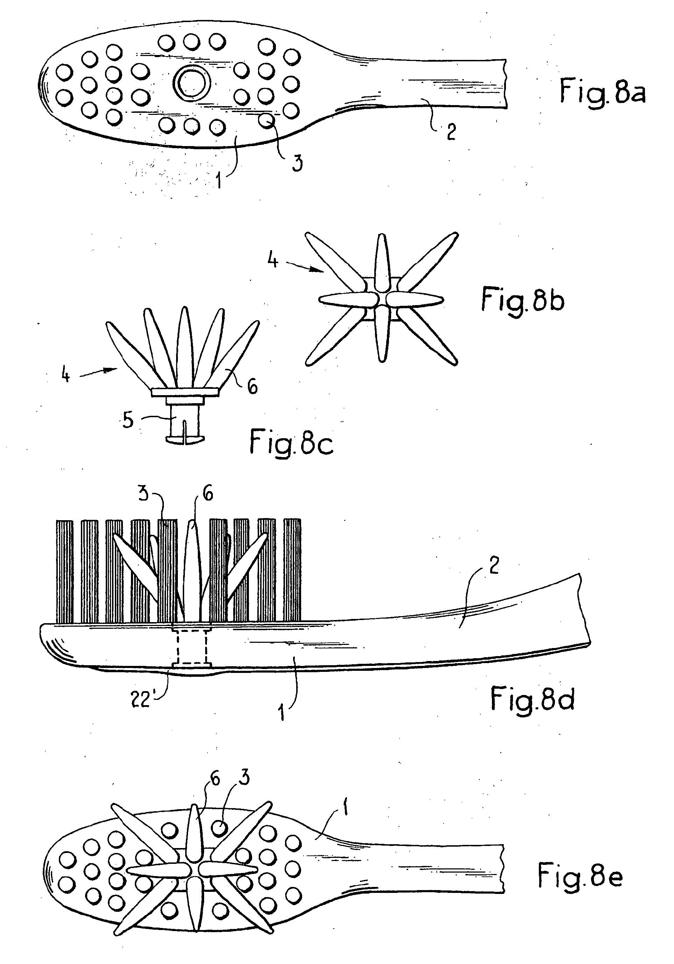

Das Zusatzteil 4 der in Fig. 4a-e dargestellten Zahnbürste ist mittels einer Schnappverbindung in der Mitte des Kopfteils 1 befestigt. Das Zusatzteil 4 umfasst ein rechteckiges Trägerelement 5, an dessen Ecken flügelartige weichelastische Reinigungselemente 6 angeordnet sind. Auf dem Trägerelement 5 befinden sich des weiteren zwei stabförmige Reinigungselemente 6 (Fig. 4b,c). Wie in Fig. 4a dargestellt, weist das Kopfteil 1 ein mittiges Loch 8" auf, das zum Durchstecken eines federnd gestalteten Fortsatzes 11 am Trägerelement 5 dient. Zusatzteil 4 und Kopfteil 1 werden durch eine Schnappverbindung miteinander verbunden, die aufgrund des am unteren Ende 11a des Fortsatzes 11 vergrösserten Querschnitts nicht ohne weiteres lösbar ist. Das Borstenfeld der konventionellen Borstenbündel 3 ist derart konfiguriert, dass die flügelartigen Reinigungselemente 6 zwischen den konventionellen Borstenbündeln 3 Platz finden, wie in Fig. 4a und 4e dargestellt. Das Zusatzteil 4 wird separat gefertigt und anschliessend in das Kopfteil 1 mit dem vorbereiteten Borstenfeld eingesetzt. Dadurch können auch durch das konventionelle Borstenfeld durchgreifende Strukturen der weichelastischen Reinigungselemente 6 realisiert werden, wie die über Eck angeordneten flügelartigen Elemente aus Fig. 4b-e oder die in verschiedene Raumrichtungen weisenden, aufgefächerten stiftförmigen Reinigungselemente aus Fig. 8. Die Unterseite des Kopfteils 1 ist aus hygienischen oder ästhetischen Gründen durch eine Schicht 22 aus weichelastischem Material abgedeckt.

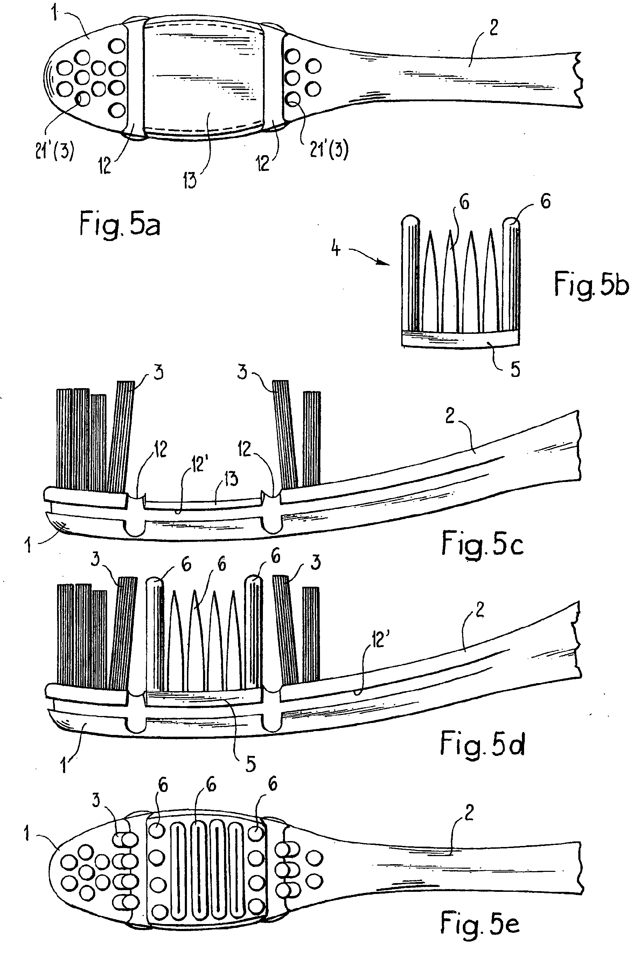

Fig. 5a-e zeigen ein weiteres Beispiel für eine Schnappverbindung zwischen dem Zusatzteil 4 und dem Kopfteil 1 einer erfindungsgemässen Zahnbürste. Das Kopfteil 1 weist innerhalb des Borstenfelds aus konventionellen Borstenbündeln 3 einen vorbereiteten Bereich 13 für die Aufnahme des Zusatzteils 4. Dieser Bereich 13 besteht aus einer Vertiefung, an deren Rand senkrecht zur Ausrichtung des Handgriffs 2 jeweils eine Nut 12 verläuft, die dem Kopfteil 1 wie auch die an seinem seitlichen Rand verlaufenden Nuten 12' eine gewisse Elastizität bzw. federnde Wirkung gibt. Der vorbereitete Bereich 13 ist geringfügig kleiner als die Grundfläche des Trägerelements 5, so dass dieses passend und in klemmender Weise in den Bereich 13 eingesetzt werden kann. Wie aus der Aufsicht in Fig. 5e erkennbar, hat das Zusatzteil sowohl stabförmige als auch flächige, quer zur Ausrichtung des Handgriffs 2 angeordnete Reinigungselemente.

Fig. 6a-f zeigt ein weiteres Beispiel für eine erfindungsgemässe Zahnbürste, hier eine Aufsteckzahnbürste für eine elektrisches Zahnreinigungsgerät. Die konventionellen Borstenbündel 3 sind an einer separaten Borstenplatte 18 befestigt, die im montierten Zustand mit dem daran angepassten Kopfteil 1 der Zahnbürste bzw. einer darauf dreh- oder schwenkbar befestigten Scheibe 23 verbunden ist. Die weichelastischen Reinigungselemente 6, hier stabförmig, sind an einem in der Aufsicht leicht gebogenen Trägerelement 5 befestigt, das einen flächigen Fortsatz 16 aufweist, der im wesentlichen senkrecht zur Ausrichtung der Reinigungselemente 6 orientiert ist. Mit diesem Fortsatz 16 lässt sich das Zusatzteil 4 in eine entsprechend geformte Nut 14 in der Scheibe 23 1 einführen. In der Mitte des Kopfteils 1 und der Nut 14 ist eine runde Aussparung 15 angeordnet, in die eine entsprechendes Gegenelement 17 am Fortsatz 16 des Zusatzteils 4 eingreift. Damit werden Zusatzteil 4 und Kopfteil 1 passend und in klemmender Weise miteinander verbunden. Die Borstenplatte 18 hat an ihrem unteren Ende eine Nut 19 mit der die Borstenplatte 18 an der Scheibe 23 bzw. deren seitlichen Fortsätzen 23 befestigt werden kann. Das Zusatzteil 4 wird in der dargestellten Ausführungsform durch die Scheibe 23 mitbewegt. Als Alternative kann das Zusatzteil 4 direkt am Kopfteil 1 befestigt werden und rotiert nicht mit.

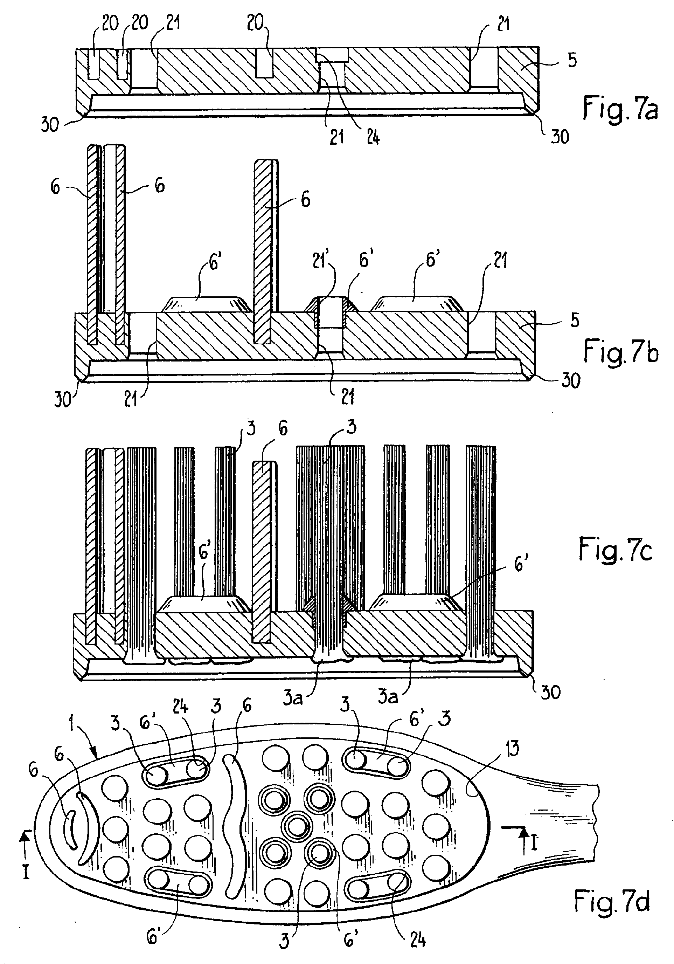

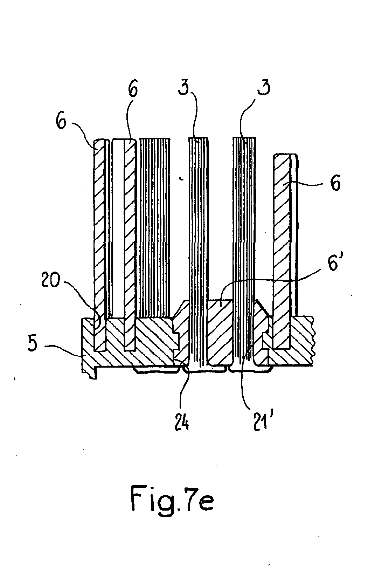

Figur 7a-e zeigen ein Beispiel für die Herstellung einer Zahnbürste mittels der AFT Technologie. Die Figuren 7a-c zeigen Schnittansichten des Trägerelements 5 in verschiedenen Verfahrensstadien, und zwar vor dem Bestücken mit weichelastischen Reinigungselementen 6 und konventionellen Borstenbündeln 3 (Fig. 7a), nach dem Aufbringen des weichelastischen Materials (Fig. 7b) und nach dem Aufbringen der Borsten (Fig. 7c). Das Trägerelement 5 ist in seiner äusseren Form an die Abmessungen eines vorbereiteten Bereichs 13 in Form einer flachen Aussparung im Kopfteil 1 der Zahnbürste angepasst. Das Trägerelement 5 weist vorbereitete Bereiche 20 auf, in die die weichelastischen Reinigungselemente 6 angebracht, insbesondere angespritzt, werden. Des weiteren hat das Trägerelement 5 Aussparungen 24, die ganz oder teilweise mit weichelastischem Material 6' gefüllt werden, vgl. auch die Detailzeichnung Fig. 7e. Des weiteren sind Löcher 21 im Trägerelement 5 vorhanden, durch die Borstenbündel 3 durchgesteckt und an der Rückseite durch Anschmelzen ihrer rückwärtigen Enden 3a befestigt werden. Die elastischen Materialbereiche 6' haben weitere Löcher 21', die ebenfalls zur Aufnahme von Borstenbündeln 3 dienen, welche auf die gleiche Art befestigt werden. Die Materialbereiche 6' können ein oder mehrere Borstenbündel 3 aufnehmen. Die im elastischen Material 6' verankerten Borstenbündel 3 sind daher besonders elastisch verankert bzw. aufgehängt. Weitere Borstenbündel 3 werden direkt auf dem Trägerelement 5 befestigt. Das mit Borstenbündeln und der weichelastischen Struktur 6, 6' bestückte Trägerelement 5 wird anschliessend in den vorbereiteten Bereich 13 eingesetzt.

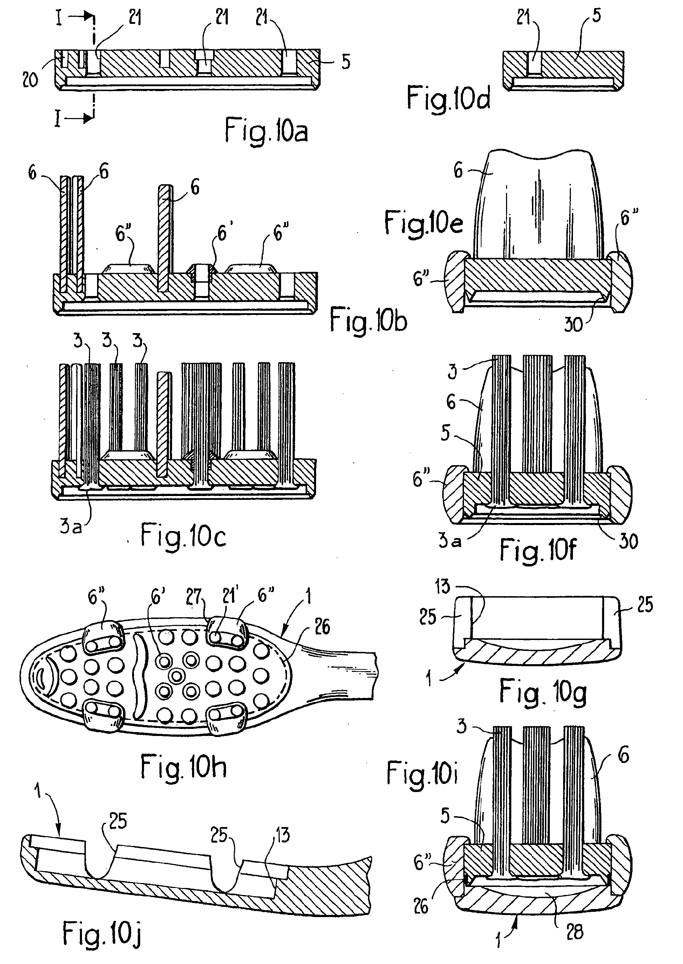

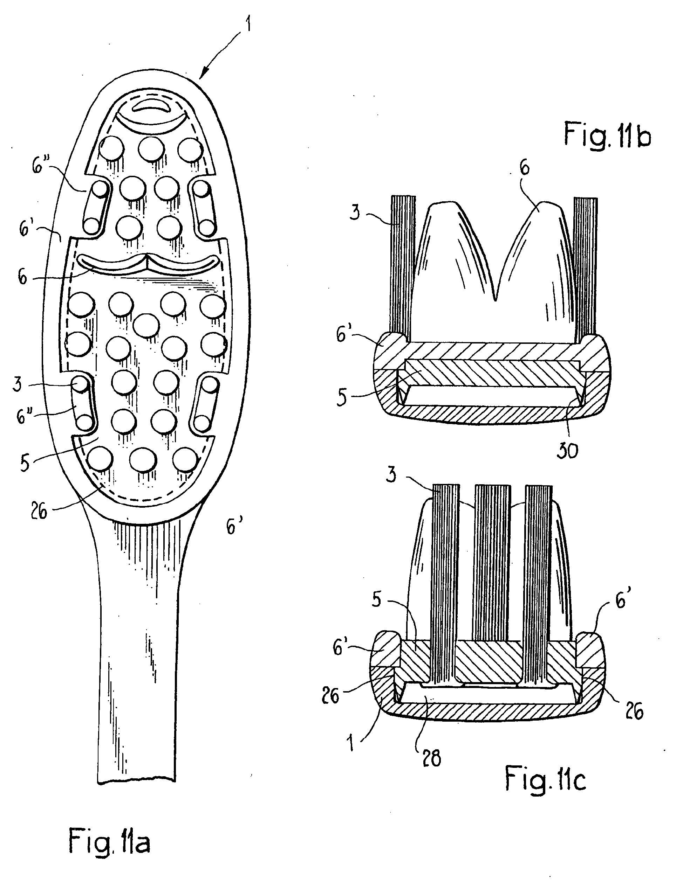

Die im Anwendungsfall dem Boden der Ausnehmung 13 zugewandte Kante 30 des Trägerelements 5 ist spitz gestaltet, ebenso im Beispiel aus Fig. 10 und 11. Diese spitz zulaufende Kante 30 dient beim Ultraschallschweissen zum Verbinden mit dem Kopfteil 1 als Energiekonzentrator sowie Materialreservoir für zu verflüssigendes Material.

Die AFT Technologie kommt ohne Anker oder Klammern zum Befestigen der Borstenfilamente aus, die stattdessen direkt an der Trägerplatte angeschweisst werden. Damit wird die Breite eines Borstenbündels nicht durch den Anker bestimmt, so dass sich auch feinere Strukturen, insbesondere auch flächige Borstenanordnungen, realisieren lassen.

Technisch ist es auch möglich, beim AFT-Verfahren die Borstenfilamente vor dem Anbringen an die Trägerplatte für den Gebrauch vorzubereiten. Realisiert wird derzeit jedoch die Variante, bei der die Borsten erst nach dem Anbringen an die Trägerplatte bearbeitet werden.

Fig. 8a-e zeigt eine Variante zur Zahnbürste aus Fig. 4. Das Borstenfeld aus konventionellen Borstenbündeln 3 entspricht Fig. 4. Das Zusatzteil 4 hat eine Mehrzahl von sternförmig auseinandergehenden stiftförmigen Reinigungselementen 6, die durch die konventionellen Borstenbündel 3 durchgreifen (Fig. 8d, e). Der Befestigungsmechanismus entspricht Figur 4. Eine Schicht 22 aus weichelastischem Material deckt die Unterseite des Kopf- und Griffteils 1,2 ab.

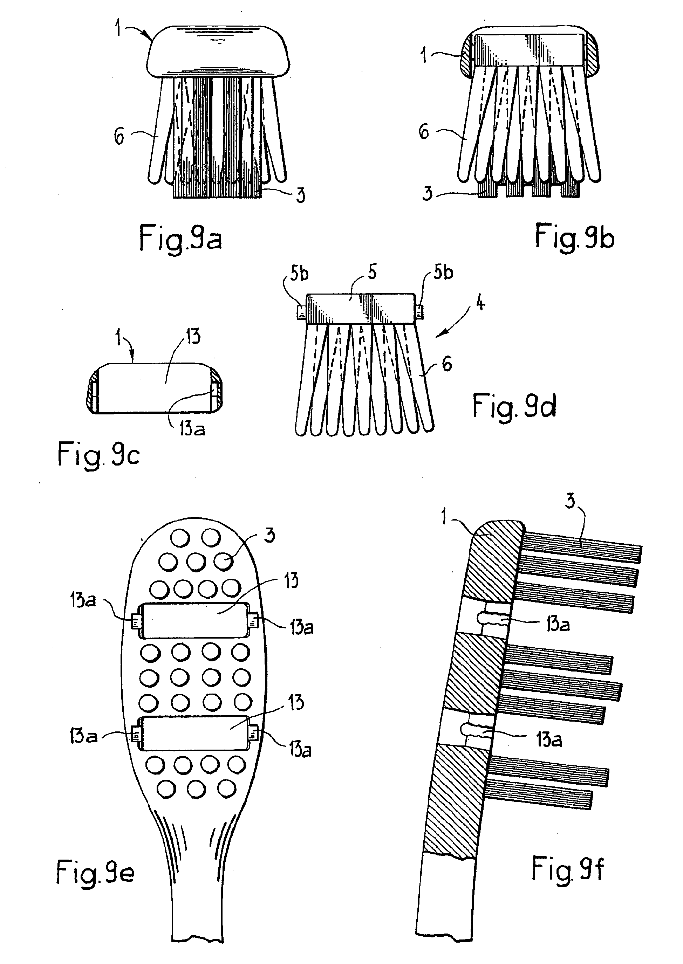

Fig. 9a-f zeigen ein weiteres Beispiel für eine erfindungsgemässe Zahnbürste. Das Kopfteil 1 weist einen vorbereiteten Bereich 13 für das Trägerelement 5 des Zusatzteils 4 auf, die grösser als das Trägerelement 5 selbst ist. Der Bereich 13 ist beispielsweise ein vollständig durch das Kopfteil 1 durchgehendes Loch, vgl. Schnittzeichnungen Fig. 9b,d,e. Der Bereich 13 hat zwei seitliche Nuten 13a, deren Form an die Form zweier seitlicher Fortsätze 5b des Trägerelements 5 angepasst ist. Dieses wird in das Kopfteil 1 eingesetzt und verrastet dort. Aufgrund des Spiels des Trägerelements 5 innerhalb des Bereichs 13, das ein seitliches Verschieben und/oder eine Schwenkbewegung um die durch die Fortsätze 5b definierte Achse ermöglicht, ergibt sich eine besondere Elastizität bzw. federnde Wirkung des Zusatzteils 4. Die Rückseite des Kopfteils 1 kann wiederum mit einer Schicht aus Weichmaterial abgedeckt sein.

Fig. 10a-j zeigt ein weiteres Beispiel für eine mittels AFT hergestellte Zahnbürste. Die Figuren 10a-c entsprechen den Figuren 7a-c und zeigen jeweils die Trägerplatte 5 in verschiedenen Verfahrensstadien. Fig. 10d-f zeigen die dieselbe Trägerplatte 5 im Schnitt entlang der in Fig. 10a angedeuteten Linie I-I. Das mittig angeordnete weichelastische Element 6 ist flächig bzw. segelartig und in der Aufsicht (Fig. 10h) wellenförmig. Wie in Fig. 10e+f dargestellt, umfasst die weichelastische Struktur seitlich angeformte Bereiche 6", die im montierten Zustand (Fig. 10h) den Zahnbürstenkopf 1 seitlich begrenzen und mit der Aussenkontur des Kopfteils nahezu bündig abschliessen. Sie dienen beispielsweise als Aufprallschutz und/oder zur zusätzlichen Massage des Gaumens. Die Bereiche 6" weisen ebenfalls Löcher 21' auf zur Aufnahme von Borstenbündeln 3, die dadurch elastisch aufgehängt und beim Putzen besonders nachgiebig sind.

Das mit konventionellen Borsten 3 und der weichelastischen Struktur 6, 6', 6" versehene Trägerelement 5 wird in eine Ausnehmung 13 im Bürstenkopf 1 eingesetzt. Der Bürstenkopf 1 ist in Fig. 10g+j ohne Trägerelement 5 sowie in Fig. 10h+i mit eingesetztem Trägerelement 5 in verschiedenen Ansichten dargestellt. An seinem seitlichen Rand weist der Bürstenkopf 1 bzw. die Ausnehmung 13 seitliche Öffnungen 25 auf, die an die zuvor an das Trägerelement 5 angespritzten seitlichen weichelastischen Bereiche 6" angepasst sind.

Das Trägerelement 5 wird mittels Ultraschallschweissen mit dem Bürstenkopf 1 verbunden. Die Schweissfläche 26 ist gestrichelt angedeutet. Um die Verschweissung zu realisieren, weist das Trägerelement an seinem unteren Rand einen Schweissrand 26' auf, der bei der Montage auf dem Grund der Aussparung 13 aufliegt, wobei die Berührungsfläche die Schweissfläche 26 definiert. Der Schweissrand 26' schmilzt unter Ultraschalleinfluss, so dass die beiden Teile 5 und 1 miteinander verbunden werden.

Da sich gummielastisches Material nur bedingt Ultraschall schweissen lässt, wird die Schweissfläche 26 möglichst frei davon gehalten, wie z.B. bei der Zahnbürste aus Fig. 7, oder nur minimal unterbrochen, wie bei der Zahnbürste aus Fig. 10. Ziel ist in beiden Fällen die vollständige Abdichtung des Hohlraums 28 zwischen Trägerelement 5 und Kopfteil 1, um Eindringen von Wasser und Keimen zu verhindern. Bevorzugt wird dazu der Anspritzpunkt des weichelastischen Materials an der borstentragenden Vorderseite des Trägerelements 5 gewählt, damit keine unnötigen Materialbrücken die Schweissfläche 26 verkleinern. Falls weitere weichelastische Elemente am Kopfteil 1, insbesondere an dessen Rückseite, vorhanden sind, wird deren Lage so gewählt, dass sie die Schweissfläche 26 nicht verkleinern. Beispielsweise liegen sie und der entsprechende Anspritzpunkt vollständig innerhalb des durch die Schweissfläche 26 definierten Bereichs an der Rückseite des Kopfteils 1 (nicht dargestellt). Bevorzugt wird die gesamte Berührungsfläche zwischen Kopfteil 1 und Trägerelement 5 zu mindestens 25% verschweisst, besonders bevorzugt entlang des Kopfumfanges (Linie 26).

Im Beispiel aus Fig. 10 unterbrechen die weichelastischen Bereiche 6" die Schweissfläche 26, so dass dort ungeschweissten Stellen 27 entstehen. Diese sind vorteilhaft an der Seite des Kopfteils 1 angeordnet, während die in Längsrichtung vorderen und hinteren Bereiche des Trägerelements 5 mit dem Kopfteil 1 fest verschweisst sind. Dadurch wird ein sicherer Halt des Trägerelements 5 gewährleistet, da durch die Putzbewegung und entsprechende Hebelkräfte der vordere und hintere Bereich der grössten Belastung ausgesetzt ist.

Die ungeschweissten Stellen 27 werden vorliegend durch die weichelastischen Bereiche 6" nach Art einer Dichtlippe abgedichtet, so dass kein oder nur wenig Wasser in den Hohlraum 28 eindringen kann. Für eine gute Dichtfunktion wird vorzugsweise Material mit einer Shore A Härte von 50 oder weniger gewählt. Ungeschweisste Stellen zwischen Kopfteil und Trägerelement können auch gezielt eingesetzt werden, um eine gewisse Flexibilität zwischen den beiden Hartkomponenten zu erreichen.

Fig. 11 zeigt ein weiteres Beispiel für eine im AFT-Verfahren hergestellte Zahnbürste mit zwei segelartigen weichelastischen Reinigungselementen 6 in verschiedenen Ansichten. Das Trägerelement 5 ist an seiner Peripherie vollständig mit weichelastischem Material 6' umgeben, das im montierten Zustand (Aufsichtdarstellung Fig 11a) das Kopfteil 1 an seinem äusseren Umfang an der Oberseite vollständig umschliesst und als Aufprallschutz dient. In Bereichen 6" dient das Weichmaterial als Halterung für seitliche Borstenbündel 3, die durch das weichelastische Material 6" hindurchgeführt sind.

Wie aus Fig. 11c hervorgeht, berühren sich die Hartkomponenten von Trägerelement 5 und Kopfteil 1 entlang einer Fläche 26 unterhalb der Weichkomponente im Bereich 6' und können hier mittels Ultraschall verschweisst werden. Die Schweissfläche 26 ist durch die seitlichen Bereiche 6" unterbrochen, wobei jedoch, wie oben beschrieben, eine ausreichende Haltewirkung erzielt wird. Der Hohlraum 28 unterhalb des Trägerelements 5 wird durch die weichelastischen Bereiche 6" und die entlang der Fläche 26 verschweissten Stellen abgedichtet.

Die oben mit Bezug auf Fig. 10 und 11 beschriebene Art der Verschweissung und Abdichtung der Komponenten kann mit Vorteil auch bei anderen Zahnbürsten eingesetzt werden.

Die nachfolgenden Absätze beschreiben Ausführungsarten, die nicht durch die Ansprüche abgedeckt sind.

Zahnbürste aufweisend einen Handgriff (2) und einen Kopfteil (1) mit einem aus einem Hartmaterial bestehenden Trägerelement (5) und einer weichelastischen Struktur (6, 6', 6"), wobei das Trägerelement (5) mit seiner Rückseite dem Kopfteil (1) zugewandt in eine an die Form des Trägerelements (5) angepasste Ausnehmung (13) im Kopfteil (1) eingesetzt und mit dem Kopfteil (1) unlösbar verbunden ist und wobei das Trägerelement (5) Aussparungen (21) aufweist, durch welche Borstenfilamente (3) hindurchgeführt sind, **dadurch gekennzeichnet, dass** das mit der weichelastischen Struktur (6, 6', 6") versehene Trägerelement (5) ein separates Zusatzteil (4) bildet, die weichelastischen Struktur (6, 6', 6") wenigstens ein weichelastisches Reinigungselement umfasst und die durch Aussparungen (21, 21') des Trägerelements (5) und/oder der weichelastischen Struktur (6") hindurchgeführten Borstenfilamente (3) zur Befestigung am Trägerelement (5) mit ihren im Anwendungsfall dem Kopfteil (1) zugewandten rückwärtigen Enden (3a) aufgeschmolzen, verschweisst oder verklebt sind.

Zahnbürste nach dem vorhergehenden Absatz, **dadurch gekennzeichnet, dass** die weichelastische Struktur (6, 6', 6") und das Trägerelement (5) durch ein Zwei- oder Mehrkomponentenspritzgiessverfahren hergestellt sind, wobei vorzugsweise eine unlösbare Verbindung zwischen der weichelastischen Struktur (6, 6', 6") und dem Trägerelement (5) besteht.

Zahnbürste nach einem der beiden vorhergehenden Absätze, **dadurch gekennzeichnet, dass** das Material des Trägerelements (5) Polypropylen (PP), Styrol-Acryl-Nitril (SAN), Acryl-Nitril-Butadienstyrol (ABS), Isoplast® oder Polyester (PET) ist.

Zahnbürste nach einem der drei vorhergehenden Absätze, **dadurch gekennzeichnet, dass** die weichelastische Struktur (6, 6', 6") aus natürlichem oder synthetischem Gummi, vorzugsweise aus einem thermoplastischen Elastomer, besteht, das bevorzugt eine Shore A Härte von weniger als 90, besonders bevorzugt von weniger als 50 hat.

Zahnbürste nach einem der vier vorhergehenden Absätze, **dadurch gekennzeichnet, dass** Verbindungsstellen zwischen dem Kopfteil (1) und dem Trägerelement (5) durch weichelastisches Material (6") abgedeckt sind, vorzugsweise in gegen das Eindringen von Wasser abdichtender Weise.

Zahnbürste nach einem der fünf vorhergehenden Absätze, **dadurch gekennzeichnet, dass** die weichelastische Struktur (6, 6', 6") seitlich am Trägerelement (5) angeordnete Bereiche (6") umfasst, die im montierten Zustand seitlich mit der Aussenkontur des Kopfteils (1) abschliessen.

Zahnbürste nach dem vorhergehenden Absatz, **dadurch gekennzeichnet, dass** die seitlich am Trägerelement (5) angeordneten Bereiche (6") unverschweisste Stellen (27) zwischen dem Kopfteil (1) und dem Trägerelement (5) gegen Eindringen von Wasser abdichten.

Zahnbürste nach dem vorhergehenden Absatz, **dadurch gekennzeichnet, dass** die ungeschweissten Stellen (27) eine gewisse Flexibilität und Beweglichkeit zwischen dem Kopfteil (1) und dem Trägerelement (5) ermöglichen.

Zahnbürste nach einem der beiden vorhergehenden Absätze, **dadurch gekennzeichnet, dass** die ungeschweißten Stellen (27) an der Seite des Kopfteils (1) angeordnet sind und dass die in Längsrichtung vorderen und hinteren Bereiche des Trägerelementes (5) mit dem Kopfteil (1) fest verschweißt sind.

Zahnbürste nach einem der vier vorhergehenden Absätze, **dadurch gekennzeichnet, dass** das Kopfteil (1) bzw. die Ausnehmung (13) seitliche Öffnungen (25) aufweist, deren Form an die am Trägerelement (5) angeordneten seitlichen weichelastischen Bereiche (6") angepasst ist.

Zahnbürste nach einem der zehn vorhergehenden Absätze, **dadurch gekennzeichnet, dass** das Trägerelement (5) an seiner Rückseite eine als Schweissrand (26') wirkende, im Anwendungsfall dem Kopfteil (1) zugewandte, als Materialreservoir und/oder Energiekonzentrator wirkende, vorzugsweise spitze Kante (30) aufweist, wobei die Berührungsfläche eine Schweissfläche (26) definiert.

Zahnbürste nach dem vorhergehenden Absatz, **dadurch gekennzeichnet, dass** die weichelastische Struktur innerhalb des durch die Schweissfläche (26) definierten Bereichs angeordnet ist.

Zahnbürste nach einem der beiden vorhergehenden Absätze, **dadurch gekennzeichnet, dass** die Schweissfläche (26) vom weichelastischen Material freigehalten ist.

Zahnbürste nach einem der drei vorhergehenden Absätze, **dadurch gekennzeichnet, dass** sich auf der Rückseite des Kopfteils (1) weitere weicheleastische Elemente befinden, die sich vollständig innerhalb eines durch die Schweissfläche (26) definierten Bereiches befinden.

Zahnbürste nach einem der vier vorhergehenden Absätze, **dadurch gekennzeichnet, dass** die Schweissfläche (26) durch seitliche Bereiche aus Weichmaterial unterbrochen ist.

Zahnbürste nach einem der fünfzehn vorhergehenden Absätze, **dadurch gekennzeichnet, dass** die weichelastische Struktur auf der Trägerplatte (5) angeordnete flächige Elemente (6) umfasst.

Zahnbürste nach einem der sechzehn vorhergehenden Absätze, **dadurch gekennzeichnet, dass** das Trägerelement (5) zur Aufnahme der weichelastischen Struktur (6, 6', 6") vorbereitete Bereiche (20) und/oder Aussparungen (24) aufweist.

Zahnbürste nach einem der siebzehn vorhergehenden Absätze, **dadurch gekennzeichnet, dass** eine Mehrzahl von borstenaufnehmenden Aussparungen (21, 21') in einem gemeinsamen Bereich der weichelastischen Struktur (6, 6', 6") angeordnet ist.

Zahnbürste nach einem der achtzehn vorhergehenden Absätze, **dadurch gekennzeichnet, dass** die konventionellen Borstenfilamente (3) vor dem Befestigen des Trägerelements (5) am Kopfteil (1) und/oder vor dem Befestigen auf dem Trägerelement (5) geschnitten und/oder abgerundet und/oder auf andere Weise für den späteren Gebrauch vorbereitbar sind.

Zahnbürste nach einem der neunzehn vorhergehenden Absätze, **dadurch gekennzeichnet, dass** sich zwischen dem Trägerelement (5) und dem Kopfteil (1) ein Hohlraum (28) befindet.

Verfahren zur Herstellung einer Zahnbürste nach einem der zwanzig vorhergehenden Absätze, wobei bei einer separaten Herstellung des mit der weichelastischen Struktur (6, 6', 6") versehenen Trägerelements (5) wenigstens eine weichelastische Struktur (6, 6', 6") an dem aus einem Hartmaterial bestehenden Trägerelement (5) befestigt wird, wobei die Borstenfilamente (3) durch Aussparungen im Trägerelement (5) und/oder in der weichelastischen Struktur (6, 6', 6") hindurchgeführt werden und zur Befestigung am Trägerelement (5) bzw. an der weichelastischen Struktur (6, 6', 6") mit ihren im Anwendungsfall dem Kopfteil (1) zugewandten rückwärtigen Enden (3a) aufgeschmolzen, verschweisst oder verklebt werden, und wobei in einem weiteren Schritt das Trägerelement (5) in eine an die Form des Trägerelements (5) angepasste Ausnehmung (13) im Kopfteil (1) eingesetzt und mit dem Kopfteil (1) der Zahnbürste unlösbar verbunden wird.

Verfahren nach dem vorhergehenden Absatz, **dadurch gekennzeichnet, dass** das Trägerelement (5) und das Kopfteil (1) unlösbar durch Verklemmen, Verschnappen, Nieten, Kleben, Schweissen, Ultraschallschweissen oder Wärmezufuhr miteinander verbunden werden.

Verfahren nach einem der beiden vorhergehenden Absätze, **dadurch gekennzeichnet, dass** die Borstenfilamente (3) vor dem Befestigen des Trägerelements (5) am Kopfteil (1) und/oder vor dem Befestigen auf dem Trägerelement (5) geschnitten und/oder abgerundet und/oder auf andere Weise gebrauchsfertig gemacht werden.

Verfahren nach einem der drei vorhergehenden Absätze, **dadurch gekennzeichnet, dass** die weichelastische Struktur (6, 6', 6") und das Trägerelement (5) im Zweikomponentenspritzgiessverfahren hergestellt und anschliessend mit dem Kopfteil (1) verbunden werden, wobei vorzugsweise eine unlösbare Verbindung zwischen der weichelastischen Struktur (6, 6', 6") und dem Trägerelement (5), bevor das Trägerelement (5) mit Borstenfilamenten (3) besetzt wird, hergestellt wird.

Verfahren nach dem vorhergehenden Absatz, **dadurch gekennzeichnet, dass** der Anspritzpunkt für das weichelastische Material an der borstentragenden Vorderseite des Trägerelements (5) gewählt wird.

Verfahren nach einem der fünf vorhergehenden Absätze, **dadurch gekennzeichnet, dass** die Trägerplatte nach dem Beborsten und der Herstellung der weichelastischen Struktur in die Ausnehmung im Kopfteil (1) eingesetzt wird und mit dem Bürstenkopf durch Ultraschallschweissen unlösbar verbunden wird.

Verfahren nach einem der sechs vorhergehenden Absätze, **dadurch gekennzeichnet, dass** eine Berührungsfläche zwischen dem Kopfteil (1) und dem Trägerelement (5) zu wenigstens 25% verschweisst wird, bevorzugt entlang des gesamten Kopfumfanges.

Verfahren nach einem der sieben vorhergehenden Absätze, **dadurch gekennzeichnet, dass** ungeschweißte Stellen (27) an der Seite des Kopfteils (1) angeordnet werden und nur die in Längsrichtung vorderen und hinteren Bereiche des Trägerelements mit dem Kopfteil (1) verschweisst werden.

Verfahren nach einem der acht vorhergehenden Absätze, **dadurch gekennzeichnet, dass** ungeschweisste Stellen (27) zwischen dem Kopfteil (1) und dem Trägerelement (5) durch weichelastisches Material (6") abgedeckt werden, vorzugsweise in gegen das Eindringen von Wasser abdichtender Weise.

Verfahren nach einem der neun vorhergehenden Absätze, **dadurch gekennzeichnet, dass** auf der Rückseite des Kopfteils (1) weitere weicheleastische Elemente ausgeformt werden, die sich vollständig innerhalb eines durch eine Schweissfläche (26) definierten Bereiches befinden.

Verfahren nach einem der zehn vorhergehenden Absätze, **dadurch gekennzeichnet, dass** die Schweissfläche (26) durch seitliche Bereiche aus Weichmaterial unterbrochen ist.

Verfahren nach einem der elf vorhergehenden Absätze, **dadurch gekennzeichnet, dass** zwischen dem Kopfteil (1) und dem Trägerelement (5) ungeschweisste Stellen ausgebildet werden, die eine gewisse Flexibilität zwischen den beiden Hartkomponenten des Kopfteils (1) und des Trägerelement (5) gewährleisten.

Verfahren nach einem der zwölf vorhergehenden Absätze, **dadurch gekennzeichnet, dass** zwischen dem Trägerelement (5) und dem Kopfteil (1) ein Hohlraum (28) ausgebildet wird.

## Patentansprüche

1. Trägerelement (5) für eine Zahnbürste mit einem Handgriff und einem Kopfteil umfassend eine an einem plattenförmigen Trägerelement (5) angeordnete weichelastische Struktur (6, 6', 22), wobei das Trägerelement (5) eine Vorderseite und eine Rückseite aufweist und aus einem Hartmaterial besteht, wobei das Trägerelement (5) einen, vorzugsweise spitz zulaufenden, Schweissrand aufweist und wobei das Trägerelement (5) und/oder die weichelastische Struktur (6') Aussparungen aufweist, durch die die Borstenfilamente hindurchgeführt und zur Befestigung am Trägerelement mit ihren im Anwendungsfall dem Kopfteil (1) zugewandten rückwärtigen Enden (3a) aufgeschmolzen, verschweisst oder verklebt sind, wobei die weichelastische Struktur mindestens ein weichelastisches Reinigungselement umfasst, das keine Borstenfilamente aufweist.

2. Trägerelement nach Anspruch 1, **dadurch gekennzeichnet, dass** das Trägerelement (5) vorbereitete Bereiche (20) aufweist, in die die weichelastischen Reinigungselemente angebracht, insbesondere angespritzt, werden.

3. Trägerelement nach Anspruch 1, **dadurch gekennzeichnet, dass** das weichelastische Reinigungselement flächig ist und mittig auf dem Trägerelement angeordnet ist.

4. Trägerelement nach einem der Ansprüche 1 bis 3, **dadurch gekennzeichnet, dass** das Trägerelement (5) in seiner äusseren Form an die Abmessungen eines vorbereiteten Bereichs (13) in Form einer flachen Aussparung im Kopfteil (1) angepasst und mit dem Kopfteil (1) verschweissbar ist.

5. Trägerelement nach einem der Ansprüche 1 bis 4, **dadurch gekennzeichnet, dass** die durch den Schweissrand definierte Schweissfläche zwischen Trägerelement und Kopfteil bevorzugt zumindest teilweise von der weichelastischen Komponente freigehalten ist.

6. Trägerelement nach einem der Ansprüche 1 bis 5, **dadurch gekennzeichnet, dass** die Schweissfläche durch seitliche Bereiche (6") aus Weichmaterial unterbrochen ist.

7. Trägerelement nach Anspruch 6, **dadurch gekennzeichnet, dass** die Schweissfläche unverschweisste Stellen seitlich am Trägerelement aufweist.

8. Trägerelement nach einem der Ansprüche 1 bis 7, **dadurch gekennzeichnet, dass** der in Längsrichtung vordere und hintere Bereich zwischen Trägerelement und Kopfteil verschweissbar ist.

9. Trägerelement nach Anspruch 6 oder 7, **dadurch gekennzeichnet, dass** die unverschweissten Stellen zwischen dem Kopfteil (1) und dem Trägerelement (5) bestimmt sind, dem gesamten Bürstenkopfes eine gewisse Flexibilität zu verleihen.

10. Trägerelement nach einem der Ansprüche 6, 7 oder 9, **dadurch gekennzeichnet, dass** die unverschweissten Stellen zwischen dem Kopfteil (1) und dem Trägerelement (5) einsetzbar sind, damit Bürstenkopf und Trägerelement gegeneinander bewegbar sind.

11. Trägerelement nach einem der Ansprüche 1 bis 10, **dadurch gekennzeichnet, dass** die weichelastische Struktur (6') und das Trägerelement (5) im Mehrkomponenten-Spritzgussverfahren herstellbar sind und wobei eine unlösbare Verbindung zwischen der weichelastischen Struktur (6') und dem Trägerelement (5) besteht.

12. Trägerelement nach einem der Ansprüche 1 bis 11, **dadurch gekennzeichnet dass** der Anspritzpunkt der Weichkomponente an der borstentragenden Seite des Trägerelements (5) angeordnet ist.

13. Trägerelement nach einem der Ansprüche 1 bis 12, **dadurch gekennzeichnet, dass** die weichelastischen Reinigungselemente (6') aus natürlichem oder synthetischem Gummi, vorzugsweise aus einem thermoplastischen Elastomer, bestehen.

14. Trägerelement nach einem der Ansprüche 1 bis 13, **dadurch gekennzeichnet, dass** die weichelastische Struktur eine Shore A Härte von weniger als 90 aufweist.

15. Trägerelement nach einem der Ansprüche 1 bis 14, **dadurch gekennzeichnet dass** mindestens eine Aussparung zur Aufnahme von Borstenfilamenten (3) in der weichelastischen Struktur (6) angeordnet ist und die im elastischen Material (6') verankerten Borstenfilamente (3) besonders elastisch verankert sind.

16. Trägerelement nach einem der Ansprüche 1 bis 15, **dadurch gekennzeichnet, dass** borstenaufnehmende Aussparungen direkt im Trägerelement (5) angeordnet und mit Borstenfilamenten versehen sind.

17. Trägerelement nach einem der Ansprüche 1 bis 16, **dadurch gekennzeichnet, dass** die weichelastische Struktur (6') seitlich am Trägerelement (5) angeordnete Bereiche (6") umfasst, die im montierten Zustand seitlich mit der Aussenkontur des Kopfteils (1) abschliessen oder alternativ über den Kopfteil (1) hinausragen.

18. Zahnbürste umfassend ein Trägerelement nach einem der Ansprüche 1 bis 17.

19. Verfahren zur Herstellung eines Trägerelements (5) für eine Zahnbürste mit einem Handgriff und einem Kopfteil, wobei das Trägerelement (5) eine Vorderseite und eine Rückseite aufweist, wobei zunächst eine aus einem Weichmaterial bestehende, weichelastische Struktur (6, 6', 22) an dem aus einem Hartmaterial bestehenden Trägerelement (5) befestigt wird und anschliessend Borstenfilamente (3) durch Aussparungen im Trägerelement (5) und/oder in der weichelastischen Struktur (6') hindurchgeführt werden und zur Befestigung am Trägerelement (5) beziehungsweise an der weichelastischen Struktur (6') mit ihren im Anwendungsfall dem Kopfteil (1) zugewandten rückwärtigen Enden (3a) aufgeschmolzen, verschweisst oder verklebt werden, und wobei das Trägerelement (5) mit dem Kopfteil (1) der Zahnbürste verbunden wird.

20. Verfahren nach Anspruch 19, wobei die Borstenfilamente (3) vor dem Befestigen am Trägerelement (5) und/oder der weichelastischen Struktur (6') geschnitten und/oder abgerundet gebrauchsfertig gemacht werden.

21. Verfahren nach Anspruch 19 oder 20, **dadurch gekennzeichnet, dass** die weichelastische Struktur (6') und das Trägerelement (5) durch ein Zweikomponenten-Spritzguss-Verfahren hergestellt werden.

22. Verfahren nach einem der Ansprüche 19 bis 21, **dadurch gekennzeichnet, dass** zwischen der weichelastischen Struktur (6') und dem Trägerelement (5) eine unlösbare Verbindung hergestellt wird.

23. Verfahren nach einem der Ansprüche 19 bis 22, **dadurch gekennzeichnet dass** der Anspritzpunkt der Weichkomponente an der borstentragenden Seite des Trägerelements (5) gewählt wird.

24. Verfahren zur Herstellung einer Zahnbürste umfassend ein Trägerelement (5) nach einem der Ansprüche 1 bis 17, **dadurch gekennzeichnet, dass** das Trägerelement (5) unlösbar mit dem Kopfteil (1) verbunden wird.

## Claims

1. Carrier element (5) for a toothbrush having a handle and a head part and comprising a soft/resilient structure (6, 6', 22) arranged on a plate-like carrier element (5), wherein the carrier element (5) has a front side and a rear side and consists of a hard material, wherein the carrier element (5) has a weld periphery, which preferably tapers to a point, and wherein the carrier element (5) and/or the soft/resilient structure (6') have/has apertures through which the bristle filaments are guided and, for fastening on the carrier element, are attached by melting, welding or adhesive bonding by way of their rear ends (3a), which, during use, are directed towards the head part (1), wherein the soft/resilient structure comprises at least one soft/resilient cleaning element, which does not have any bristle filaments.

2. Carrier element according to Claim 1, **characterized in that** the carrier element (5) has prepared regions (20) into which the soft/resilient cleaning elements are fitted, in particular by injection moulding.

3. Carrier element according to Claim 1, **characterized in that** the soft/resilient cleaning element is planar and is arranged centrally on the carrier element.

4. Carrier element according to one of Claims 1 to 3, **characterized in that** the carrier element (5) has its outer shape adapted to the dimensions of a prepared region (13) in the form of a shallow aperture in the head part (1) and can be welded to the head part (1).

5. Carrier element according to one of Claims 1 to 4, **characterized in that** the weld surface defined by the weld periphery between the carrier element and head part is preferably kept free, at least in part, of the soft/resilient component.

6. Carrier element according to one of Claims 1 to 5, **characterized in that** the weld surface is interrupted by lateral regions (6") made of soft material.

7. Carrier element according to Claim 6, **characterized in that** the weld surface has non-welded locations laterally on the carrier element.

8. Carrier element according to one of Claims 1 to 7, **characterized in that** it is possible to weld the front and rear regions, as seen in the longitudinal direction, between the carrier element and head part.

9. Carrier element according to Claim 6 or 7, **characterized in that** the non-welded locations between the head part (1) and the carrier element (5) are intended to give the brush head as a whole a certain level of flexibility.

10. Carrier element according to one of Claims 6, 7 and 9, **characterized in that** the non-welded locations between the head part (1) and the carrier element (5) can be used in order for the brush head and carrier element to be movable in relation to one another.

11. Carrier element according to one of Claims 1 to 10, **characterized in that** the soft/resilient structure (6') and the carrier element (5) can be produced by multi-component injection moulding, and wherein there is a non-releasable connection between the soft/resilient structure (6') and the carrier element (5).

12. Carrier element according to one of Claims 1 to 11, **characterized in that** the injection point of the soft component is arranged on the bristle-carrying side of the carrier element (5).

13. Carrier element according to one of Claims 1 to 12, **characterized in that** the soft/resilient cleaning elements (6') consist of natural or synthetic rubber, preferably of a thermoplastic elastomer.

14. Carrier element according to one of Claims 1 to 13, **characterized in that** the soft/resilient structure has a Shore A hardness of less than 90.

15. Carrier element according to one of Claims 1 to 14, **characterized in that** at least one aperture for accommodating bristle filaments (3) is arranged in the soft/resilient structure (6), and the bristle filaments (3) anchored in the elastic material (6') are anchored in a particularly elastic manner.

16. Carrier element according to one of Claims 1 to 15, **characterized in that** bristle-accommodating apertures are arranged directly in the carrier element (5) and are provided with bristle filaments.

17. Carrier element according to one of Claims 1 to 16, **characterized in that** the soft/resilient structure (6') comprises regions (6") which are arranged laterally on the carrier element (5) and, in the fitted state, terminate laterally with the outer contour of the head part (1) or, as an alternative, project beyond the head part (1).

18. Toothbrush comprising a carrier element according to one of Claims 1 to 17.

19. Method of producing a carrier element (5) for a toothbrush having a handle and a head part, wherein the carrier element (5) has a front side and a rear side, wherein first of all a soft/resilient structure (6, 6', 22), which consists of a soft material, is fastened on the carrier element (5), which consists of a hard material, and then bristle filaments (3) are guided through apertures in the carrier element (5) and/or in the soft/resilient structure (6') and, for fastening on the carrier element (5) and/or on the soft/resilient structure (6'), are attached by melting, welding or adhesive bonding by way of their rear ends (3a), which, during use, are directed towards the head part (1), and wherein the carrier element (5) is connected to the head part (1) of the toothbrush.

20. Method according to Claim 19, wherein, prior to being fastened on the carrier element (5) and/or the soft/resilient structure (6'), the bristle filaments (3) are made ready for use by being cut and/or rounded.

21. Method according to Claim 19 or 20, **characterized in that** the soft/resilient structure (6') and the carrier element (5) are produced by two-component injection moulding.

22. Method according to one of Claims 19 to 21, **characterized in that** a non-releasable connection is established between the soft/resilient structure (6') and the carrier element (5).

23. Method according to one of Claims 19 to 22, **characterized in that** the injection point of the soft component is selected to be on the bristle-carrying side of the carrying element (5).

24. Method of producing a toothbrush comprising a carrier element (5) according to one of Claims 1 to 17, **characterized in that** the carrier element (5) is connected in a non-releasable manner to the head part (1).

## Revendications

1. Elément de support (5) pour une brosse à dents comprenant une poignée et une partie de tête comprenant une structure élastique souple (6, 6', 22) disposée au niveau d'un élément de support en forme de plaque (5), l'élément de support (5) présentant un côté avant et un côté arrière et se composant d'un matériau dur, l'élément de support (5) présentant un bord de soudage se terminant de préférence en pointe, et l'élément de support (5) et/ou la structure élastique souple (6') présentant des évidements à travers lesquels les filaments de poils sont guidés et sont fondus, soudés ou collés pour la fixation à l'élément de support par leurs extrémités arrière (3a) tournées vers la partie de tête (1) lors de l'utilisation, la structure élastique souple comprenant au moins un élément de nettoyage élastique souple qui ne présente aucun filament de poil.

2. Elément de support selon la revendication 1, **caractérisé en ce que** l'élément de support (5) présente des régions préparées (20) dans lesquelles sont montés les éléments de nettoyage élastiques souples, par exemple par surmoulage.

3. Elément de support selon la revendication 1, **caractérisé en ce que** l'élément de nettoyage élastique souple est plat et est disposé centralement sur l'élément de support.

4. Elément de support selon l'une quelconque des revendications 1 à 3, **caractérisé en ce que** l'élément de support (5) est adapté dans sa forme extérieure aux dimensions d'une région préparée (13) sous forme d'évidement plat dans la partie de tête (1) et peut être soudé à la partie de tête (1).

5. Elément de support selon l'une quelconque des revendications 1 à 4, **caractérisé en ce que** la surface de soudage, définie par le bord de soudage, entre l'élément de support et la partie de tête est de préférence au moins en partie exempte du composant élastique souple.

6. Elément de support selon l'une quelconque des revendications 1 à 5, **caractérisé en ce que** la surface de soudage est interrompue par des régions latérales (6") en matériau souple.

7. Elément de support selon la revendication 6, **caractérisé en ce que** la surface de soudage présente des zones non soudées latéralement sur l'élément de support.

8. Elément de support selon l'une quelconque des revendications 1 à 7, **caractérisé en ce que** les régions avant et arrière dans la direction longitudinale entre l'élément de support et la partie de tête peuvent être soudées.

9. Elément de support selon la revendication 6 ou 7, **caractérisé en ce que** les zones non soudées entre la partie de tête (1) et l'élément de support (5) sont prévues pour conférer à l'ensemble de la tête de brosse une certaine flexibilité.

10. Elément de support selon l'une quelconque des revendications 6, 7 ou 9, **caractérisé en ce que** les zones non soudées entre la partie de tête (1) et l'élément de support (5) peuvent être utilisées afin que la tête de brosse et l'élément de support puissent être mobiles l'un par rapport à l'autre.

11. Elément de support selon l'une quelconque des revendications 1 à 10, **caractérisé en ce que** la structure élastique souple (6') et l'élément de support (5) peuvent être fabriqués dans un procédé de moulage par injection de plusieurs composants, une connexion permanente existant entre la structure élastique souple (6') et l'élément de support (5).

12. Elément de support selon l'une quelconque des revendications 1 à 11, **caractérisé en ce que** le point de surmoulage du composant souple est disposé sur le côté de l'élément de support (5) portant les poils.

13. Elément de support selon l'une quelconque des revendications 1 à 12, **caractérisé en ce que** les éléments de nettoyage élastiques souples (6') se composent de caoutchouc naturel ou synthétique, de préférence d'un élastomère thermoplastique.

14. Elément de support selon l'une quelconque des revendications 1 à 13, **caractérisé en ce que** la structure élastique souple présente une dureté Shore A inférieure à 90.

15. Elément de support selon l'une quelconque des revendications 1 à 14, **caractérisé en ce qu'**au moins un évidement est prévu dans la structure élastique souple (6) pour recevoir des filaments de poils (3), et les filaments de poils (3) ancrés dans le matériau élastique (6') sont ancrés de manière particulièrement élastique.

16. Elément de support selon l'une quelconque des revendications 1 à 15, **caractérisé en ce que** des évidements recevant les poils sont disposés directement dans l'élément de support (5) et sont pourvus de filaments de poils.

17. Elément de support selon l'une quelconque des revendications 1 à 16, **caractérisé en ce que** la structure élastique souple (6') comprend des régions (6") disposées latéralement sur l'élément de support (5), lesquelles se terminent, dans l'état monté, latéralement avec le contour extérieur de la partie de tête (1) ou en variante font saillie au-delà de la partie de tête (1).

18. Brosse à dents comprenant un élément de support selon l'une quelconque des revendications 1 à 17.

19. Procédé de fabrication d'un élément de support (5) pour une brosse à dents, comprenant une poignée et une partie de tête, l'élément de support (5) présentant un côté avant et un côté arrière, une structure élastique souple (6, 6', 22) constituée d'un matériau souple étant d'abord fixée sur l'élément de support (5) constitué d'un matériau dur, et ensuite des filaments de poils (3) étant guidés à travers des évidements dans l'élément de support (5) et/ou dans la structure élastique souple (6') et étant fondus, soudés ou collés pour la fixation à l'élément de support (5) ou à la structure élastique souple (6') par leurs extrémités arrière (3a) tournées vers la partie de tête (1) lors de l'utilisation, et l'élément de support (5) étant connecté à la partie de tête (1) de la brosse à dents.

20. Procédé selon la revendication 19, dans lequel les filaments de poils (3), avant la fixation à l'élément de support (5) et/ou à la structure élastique souple (6'), sont coupés et/ou arrondis sous forme prête à l'utilisation.

21. Procédé selon la revendication 19 ou 20, **caractérisé en ce que** la structure élastique souple (6') et l'élément de support (5) sont fabriqués par un procédé de moulage par injection à deux composants.

22. Procédé selon l'une quelconque des revendications 19 à 21, **caractérisé en ce qu'**entre la structure élastique souple (6') et l'élément de support (5) est réalisée une connexion permanente.

23. Procédé selon l'une quelconque des revendications 19 à 22, **caractérisé en ce que** le point de surmoulage du composant souple est choisi au niveau du côté portant les poils de l'élément de support (5).

24. Procédé de fabrication d'une brosse à dents, comprenant un élément de support (5) selon l'une quelconque des revendications 1 à 17, **caractérisé en ce que** l'élément de support (5) est connecté à la partie de tête (1) de manière permanente.
